# EUROPEAN PATENT APPLICATION

(11) **EP 4 523 581 A1**
(43) Date of publication of application: **19.03.2025**
(21) Application number: 23197735.6
(22) Date of filing: 15.09.2023
(51) Int. Cl.: A47J 37/06, F24C 15/32

(54) **AIR FRYER WITH AIRFLOW GUIDANCE**

(71) Applicant: Versuni Holding B.V., 5656 AE Eindhoven (NL)
(72) Inventor: BONACCORSO, Davide, 5656 AE Eindhoven (NL); KAISER, Manuel, 5656 AE Eindhoven (NL)
(74) Representative: Vollering, Stefanus Franciscus Maria

(57) **Abstract**

Provided is an air fryer (100) comprising a cooking chamber (102), a heating element (105), and a circulation system for circulating air heated by the heating element in the cooking chamber. A height of the cooking chamber is defined between a top and a bottom of the cooking chamber when the air fryer is orientated for use. The circulation system comprises a fan (106) arranged to draw in air along an axial direction (108), to provide an airflow that traverses the height of the cooking chamber, and expel the air in radial directions (110). A plurality of air guide members (112, 113, 114) are spaced apart from each other around the fan. Each of the air guide members has a surface (118) arranged to guide air radially expelled from the fan towards an end (120) of the cooking chamber that faces the fan.

## Description

### FIELD OF THE INVENTION

The invention relates to an air fryer, in particular an air fryer comprising a cooking chamber whose height is defined between a top and a bottom of the cooking chamber when the air fryer is orientated for use, a heating element, and a circulation system that provides an airflow that traverses the height of the cooking chamber and is heated by the heating element.

### BACKGROUND OF THE INVENTION

Air fryers are already common kitchen appliances but their popularity continues to grow. Air fryers may, for example, take the form of portable ovens which are designed to fit on a kitchen work surface.

Air fryers can be distinguished from, for example, convection ovens at least partly by the direction of air circulation through the cooking chamber. The air fryer's cooking chamber has, when orientated for use, a top and a bottom. A circulation system, e.g. in the form of a fan driven by a motor, provides an airflow that traverses the height of the cooking chamber and is heated by the heating element. In this way, air is circulated upwardly through food received in the cooking chamber in the direction of the top.

By, for instance, mounting the air fryer's heating element proximal to the top of cooking chamber, air having passed upwardly through the food can be reheated by the heating element before being passed around an air duct and being introduced back into the food at the bottom. Introduction of the reheated air into the food may be assisted, for example, by a so-called "starfish" air guidance feature being located in the air duct beneath the food.

This arrangement has various advantages, particularly over kitchen appliances that do not provide an airflow up through food. By heated air being circulated upwardly through the food, a more homogeneous cooking result may be achieved and/or cooking time may be reduced.

Challenges nonetheless remain in terms of ensuring that airflow through food is promoted over airflow that does not pass through food.

### SUMMARY OF THE INVENTION

The invention is defined by the claims.

According to examples in accordance with an aspect of the invention, there is provided an air fryer comprising: a cooking chamber, a height of the cooking chamber being defined between a top and a bottom of the cooking chamber when the air fryer is orientated for use; a heating element; a circulation system for circulating air heated by the heating element in the cooking chamber, the circulation system comprising a fan arranged to draw in air along an axial direction, to provide an airflow that traverses the height of the cooking chamber, and expel the air in radial directions; a plurality of air guide members spaced apart from each other around the fan, each of the air guide members having a surface arranged to guide at least part of air radially expelled from the fan towards an end of the cooking chamber that faces the fan, wherein a first portion of the surface faces said end of the cooking chamber and a second portion of the surface extends away from the first portion and towards said end of the cooking chamber; a permeable food support for supporting food in the cooking chamber; and an air channel between the end of the cooking chamber and the food support, the air channel being arranged to receive air guided to the end of the cooking chamber, and distribute said air to the food supported by the food support.

The air radially expelled from the fan may be initially received by the first portion of the surface of each air guide member that faces the fan-facing end of the cooking chamber, and subsequently guided by the second portion of the surface towards the fan-facing end.

This air may be received in the air channel between the fan-facing end and the permeable food support, and the air channel may distribute the air to the food supported by the food support.

In this way, the air guide members may assist in encouraging air to traverse the height of the cooking chamber and thus pass through food received in the cooking chamber, rather than to pass, for example, horizontally across the food.

Thus, the air guide members may assist to enhance cooking performance, for example by helping to provide a more homogeneous cooking result and/or a shorter cooking time.

The food support is permeable to air passing through the food support to be received in the air channel and/or so that air in the air channel can pass through the food support to reach the food supported on the food support.

The food support may delimit apertures for allowing air to pass through the food support.

The air guide members may be distributed, e.g. evenly spaced apart from each other, around the fan.

This distribution, e.g. rotationally symmetric arrangement, of air guide members may assist to make flow of heated air towards the fan-facing end of the cooking chamber relatively uniform around the fan.

In some embodiments, the surface of each of the air guide members curvedly extends between the first portion and the second portion. By the surface curving between the first portion and the second portion, the surface may encourage the air radially expelled from the fan to follow the surface and change direction towards the fan-facing end of the cooking chamber.

In some embodiments, the plurality of air guide members comprises at least three air guide members. Three or more air guide members spaced apart from each other, e.g. evenly spaced apart from each other, around the fan may provide particularly effective air guidance towards the fan-facing end of the cooking chamber. Three or four air guide members may provide a favorable balance between effective air guidance and simple/cost-effective construction of the air fryer.

In some embodiments, one or more of the air guide members is or are permanently mounted in the air fryer. Permanently mounting one or more of the air guide members in the air fryer may assist to ensure more consistent and reliable air guidance relative to, for example, detachable mounting of the air guide member(s). Detachable mounting of the air guide member(s) could increase risk of unsuitable airflow conditions being created in the cooking chamber due to erroneous (re-)attachment of the air guide members by the user and/or failure of the user to (re-)attach the air guide members.

In some embodiments, the air fryer comprises a housing that extends into the cooking chamber. The housing may, for example, contain one or more sensors, for example one or more of an infrared sensor and a camera. Alternatively or additionally, the housing may be configured to enable an interior of the cooking chamber to be viewed from outside the cooking chamber through a viewing window defined in the housing.

The viewing window may assist the user to monitor cooking of food, e.g. directly by eye and/or via a camera assembly arranged to capture image(s) of the interior of the cooking chamber through the viewing window.

In some embodiments, at least part of the housing is arranged around the fan and in the path of air radially expelled from the fan. This arrangement of the housing may assist the interior of the cooking chamber to be sensed and/or viewed from outside the cooking chamber. Whilst arrangement of the housing in the path of air radially expelled from the fan may risk compromising uniformity of flow of heated air towards the fan-facing end of the cooking chamber from different regions around the fan, this issue may be mitigated by inclusion of the air guide members arranged, together with the housing, around the fan.

In some embodiments, the housing is spaced apart from one or more of the air guide members around the fan. Alternatively or additionally, one of the air guide members may be integrated into the housing. This may be implemented by the surface of said one of the air guide members, including the first and second portions, corresponding to a surface of the housing. In such embodiments, the housing may fulfil a dual purpose: (i) providing a housing for sensor(s) and/or a viewing window tunnel in which the viewing window is defined, and (ii) assisting to guide air towards the fan-facing end of the cooking chamber.

In some embodiments, the fan is arranged proximal to the top of the cooking chamber, with the fan-facing end of the cooking chamber corresponding to the bottom of the cooking chamber. In such embodiments, the axial direction along which the fan draws air is upwardly towards the top of the cooking chamber, and the air guide members may guide air radially expelled by the fan downwardly towards the bottom of the cooking chamber.

In some embodiments, the air fryer comprises an outer wall that at least partly delimits the cooking chamber, and an inner wall, with the inner wall at least partly delimiting an inner cooking chamber in which food is receivable.

In such embodiments, an air duct is defined between the outer wall and the inner wall, with the surfaces of the air guiding members being arranged to guide at least part of air radially expelled from the fan into the air duct and towards the end of the cooking chamber. The air guide members guiding air radially expelled from the fan into the air duct may be particularly effective in promoting air circulation through, rather than across, food received in the inner cooking chamber.

It is noted that the air duct may extend to reach the air channel provided between the end of the cooking chamber and the food support.

The inner wall may be attached or attachable to the food support. For example, the inner wall and the food support may together define a receptacle, e.g. a basket, in which food is receivable.

In some embodiments, the air fryer comprises a heat reflector that partitions the cooking chamber into a first zone and a second zone. Such a heat reflector may assist efficient heating of food located in the first zone of the cooking chamber.

The fan may, for example, be arranged in the second zone, with an opening in the heat reflector being arranged to enable air to be drawn into the fan along said axial direction.

In embodiments in which the air fryer comprises the inner wall, the inner wall may extend from the heat reflector so that the air duct is at least partly defined by the heat reflector and the inner wall on one side and the outer wall of the cooking chamber on the other side.

In such embodiments, the heat reflector and the inner wall may, together with the air guide members, guide the air, e.g. almost all of the air, radially expelled from the fan into the air channel.

In embodiments in which the air fryer includes the housing that extends into the cooking chamber, the housing may extend across the second zone. Extension of the housing across the second zone may, for example, enable the first zone of the cooking chamber to be sensed and/or viewed via sensor(s) and/or a viewing window defined in the housing.

Thus, the food in the first zone of the cooking chamber may be sensed and/or viewed via the viewing window in spite of inclusion of the heat reflector.

In some embodiments, one of more of the air guide members is or are mounted to the heat reflector. In such embodiments, the heat reflector may fulfil the additional purpose of supporting one or more of the air guide members.

In some embodiments, the food support is removable from the cooking chamber. Thus, the food support may be removed from the cooking chamber for the purpose of loading food onto the food support and/or unloading food from the food support. Alternatively or additionally, the food support may be removed from the cooking chamber for cleaning.

In embodiments in which the inner wall is attached or attachable to the food support, the food support may be removable from the cooking chamber together with the inner wall.

The food support may be a single part or may be included in an assembly of components. Such an assembly of components may, for example, include the food support and the inner wall.

The assembly of components may facilitate cleaning of the food support, e.g. by disassembly of the assembly permitting components, e.g. the food support and the inner wall, to be cleaned separately from each other.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts an air fryer according to a first example;
FIG. 2 schematically depicts an air fryer according to a second example;
FIG. 3 provides an interior view towards the top of a cooking chamber of an air fryer according to a third example;
FIG. 4 schematically depicts an air fryer according to a fourth example; and
FIG. 5 schematically depicts an air fryer according to a fifth example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an air fryer comprising a cooking chamber, a heating element, and a circulation system for circulating air heated by the heating element in the cooking chamber. A height of the cooking chamber is defined between a top and a bottom of the cooking chamber when the air fryer is orientated for use. The circulation system comprises a fan arranged to draw in air along an axial direction, to provide an airflow that traverses the height of the cooking chamber, and expel the air in radial directions. A plurality of air guide members are spaced apart from each other around the fan. Each of the air guide members has a surface arranged to guide air radially expelled from the fan towards an end of the cooking chamber that faces the fan.

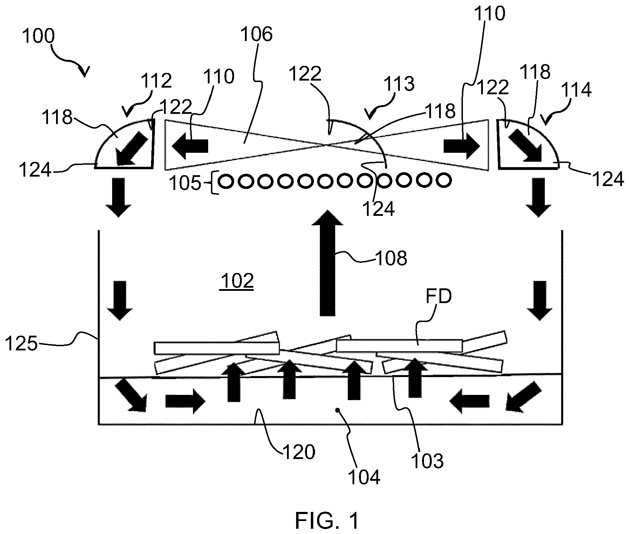

FIG. 1 schematically depicts an air fryer 100 according to an example. The air fryer 100 comprises a cooking chamber 102 and a food support 103 on which food FD is supportable at least when the food FD is received in the cooking chamber 102.

Further evident in FIG. 1 is an air channel 104 provided adjacent to the food support 103. The food support 103 is permeable to air passing through the food support 103 to reach the air channel 104. Alternatively or additionally, air in the air channel 104 can pass through the food support 103 to reach the food FD supported on the food support 103. To this end, the food support 103 may delimit apertures for allowing air to pass through the food support 103.

In some embodiments, the food support 103 is removable from the cooking chamber 102. Thus, the food support 103 may be removed from the cooking chamber 102 for the purpose of loading food FD onto the food support 103 and/or unloading food FD from the food support 103. Alternatively or additionally, the food support 103 may be removed from the cooking chamber 102 for cleaning.

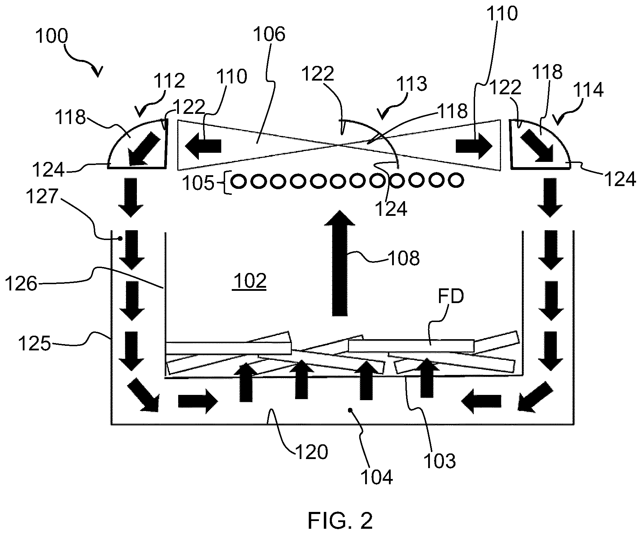

In some embodiments, such as shown in FIG. 2, the food support 103 is included in a food basket, e.g. a food basket that is removable from the cooking chamber 102. Further explanation of the embodiment shown in FIG. 2 will be provided herein below.

The food support 103 may be a single part or may be included in an assembly of components. The assembly of components may facilitate cleaning of the food support 103, e.g. by disassembly of the assembly permitting components to be cleaned separately from each other.

The food support 103 can be formed from any suitable thermally and mechanically robust material. In some embodiments, the food support 103 is formed from a metallic material and/or a plastic material.

Non-limiting examples of metallic materials for inclusion in the food support 103 include aluminium and/or stainless steel. Non-limiting examples of plastic material, e.g. heat resistant plastic material, for inclusion in the food support 103 include silicone, polyetherimide (PEI), polyphthalamide (PPA) and polyphenylene sulfide (PPS) composite material, etc.

More generally, the air fryer 100 comprises a heating element 105, and a circulation system for circulating air heated by the heating element 105 in the cooking chamber 102.

The heating element 105 can have any suitable design. In some embodiments, such as shown in FIGs. 1 to 3, the heating element 105 comprises, e.g. is, a spiral resistive heating element 105.

In such embodiments, air can be circulated by the circulation system through space(s) between coils of such a spiral resistive heating element 105 in order to heat the air.

The circulation system comprises a fan 106 arranged to draw in air along an axial direction 108, to provide an airflow that traverses a height of the cooking chamber 102, and expel the air in radial directions 110. The fan's 106 rotation may be driven by a motor (not visible) included in the circulation system.

It is noted that the height of the cooking chamber 102 is defined between the top and the bottom of the cooking chamber 102 when the air fryer 100 is orientated for use, as shown in, for example, FIGs. 1 and 2.

The bottom of the cooking chamber 102 may be proximal to a kitchen countertop on which the air fryer 100 is disposed for use, with the top of the cooking chamber 102 being above and distal with respect to the kitchen countertop.

The airflow traversing the height of the cooking chamber 102 may mean that air is circulated upwardly through the food FD received in the cooking chamber 102 in the direction of the top of the cooking chamber 102 through the food FD received in the cooking chamber 102 in the direction of the bottom of the cooking chamber 102.

Circulating air through, rather than merely across, the food FD may assist to provide a frying-type cooking effect, relatively homogeneous cooking of the food FD and/or a shorter cooking time.

There may nonetheless be a risk that some of the air accelerated by the fan 106, e.g. radial fan 106, is not guided through the food FD. For example, at least part of the airflow may only circulate at the top of the cooking chamber 102 without any beneficial effect or function. This may present a challenge especially in conventional air fryers without a heat reflector and with poor top airflow guidance. Cooking results that are less homogeneous than desired and excessive cooking times may result, especially when cooking staple food FD, e.g. French fries.

At least partly for this reason, and referring again to FIGs. 1 to 3, the air fryer 100 comprises a plurality of air guide members 112, 113, 114, 115 spaced apart from each other around the fan 106. Each of the air guide members 112, 113, 114, 115 has a surface 118 arranged to guide at least part of air radially expelled from the fan 106 towards an end 120 of the cooking chamber 102 that faces the fan 106.

The air guide members 112, 113, 114, 115 may assist in encouraging air to traverse the height of the cooking chamber 102 and thus pass through food FD received in the cooking chamber 102, rather than to pass, for example, horizontally across the food FD. Thus, the air guide members 112, 113, 114, 115 may assist to enhance cooking performance, for example by helping to provide a more homogeneous cooking result and/or a shorter cooking time.

The air guide members 112, 113, 114, 115 can be regarded as air guide flaps or wings.

The air guide members 112, 113, 114, 115, e.g. air guide flaps, can assist to convert a circumferential velocity component of air expelled by the fan 106 to a vertical, e.g. downward, flow towards the fan-facing end 120 of the cooking chamber 102.

Inclusion of such a plurality of air guide members 112, 113, 114, 115 may mean that the rotating airflow provided around the fan 106 is deflected vertically, e.g. downwards, at different radial positions around the fan 106.

Therefore, the air guidance provided by the air guide members 112, 113, 114, 115 may translate the rotational component of the air speed into a more vertical, e.g. descending, component, allowing a more homogeneous airflow to reach the food FD.

As shown in FIGs. 1 and 2, the, e.g. at least one, air channel 104 is provided between the fan-facing end 120 of the cooking chamber 102 and the food support 103, with the air channel 104 being arranged to receive air guided to the fan-facing end 120 of the cooking chamber 102, and to distribute this air, e.g. due to the air moving along the air channel 104, to the food FD supported by the food support 103.

In some embodiments, such as shown in FIGs. 1 to 3, the fan 106 is arranged proximal to the top of the cooking chamber 102, with the fan-facing end 120 of the cooking chamber 102 corresponding to the bottom of the cooking chamber 102. In such embodiments, the axial direction 108 along which the fan 106 draws air is upwardly towards the top of the cooking chamber 102, and the air guide members 112, 113, 114, 115 may guide air radially expelled by the fan 106 downwardly towards the bottom of the cooking chamber 102. This airflow is represented in FIGs. 1 and 2 by the solid arrows.

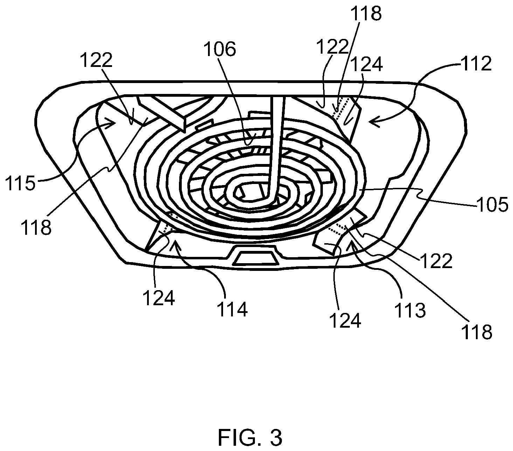

FIG. 3 provides an interior view towards the top of the cooking chamber 102 of a prototype air fryer 100 having air guide members 112, 113, 114, 115. Testing using this air fryer 100, which had an architecture of the type schematically depicted in FIG. 2, showed significantly enhanced cooking performance in terms of both cooking time and homogeneity.

As best shown in FIG. 3, a first portion 122 of the surface 118 of each of the air guide members 112, 113, 114, 115 faces the end 120, e.g. the bottom, of the cooking chamber 102 and a second portion 124 of the surface 118 extends away from the first portion 122 and towards the end 120, e.g. the bottom, of the cooking chamber 102.

This shape of each of the air guide members 112, 113, 114, 115 may mean that the air radially expelled from the fan 106 may be initially received by the first portion 122 of the surface 118 of each air guide member 112, 114, 115, 116, and subsequently guided by the second portion 124 of the surface 118 towards the fan-facing end 120.

Thus, the shape of the air guide members 112, 113, 114, 115 may assist in encouraging air to traverse the height of the cooking chamber 102 and thus pass through food FD received in the cooking chamber 102.

At least part of the surface 118 of each of the air guide members 112, 113, 114, 115, e.g. flaps, may, for instance, be quasi-orthogonal to the circumferential speed component of air expelled by the fan 106.

The surface 118 may of course be shaped in a way that minimizes flow energy losses.

In some embodiments, and as best shown in FIG. 3, the surface 118 of each of the air guide members 112, 113, 114, 115 curvedly extends between the first portion 122 and the second portion 124. By the surface 118 curving between the first portion 122 and the second portion 124, the surface 118 may encourage the air radially expelled from the fan 106 to follow the surface 118 and change direction towards the fan-facing end 120 of the cooking chamber 102.

The air guide members 112, 113, 114, 115 may be distributed, e.g. evenly spaced apart from each other, around the fan 106. This distribution, e.g. rotationally symmetric arrangement, of air guide members 112, 113, 114, 115 may assist to make flow of heated air towards the fan-facing end 120 relatively uniform around the fan 106.

The number of air guide members 112, 113, 114, 115, in other words air guide flaps, may be decided on a case-by-case basis, depending on airflow behavior within the air fryer 100.

The air guidance may, for example, be achieved by at least two air guide members 112, 113, 114, 115, e.g. curved flaps. Inclusion of at least a pair of air guide members 112, 113, 114, 115 may promote uniform, e.g. symmetrical, airflow in the cooking chamber 102. For example, each pair of air guide members 112, 114; 113, 115 may be arranged opposite each other across the fan 106.

In some embodiments, the plurality of air guide members 112, 113, 114, 115 comprises at least three air guide members. Three or more air guide members 112, 113, 114, 115 spaced apart from each other, e.g. evenly spaced apart from each other, around the fan 106 may provide particularly effective air guidance towards the fan-facing end 120 of the cooking chamber 102. Three or four air guide members 112, 113, 114, 115 may provide a favorable balance between effective air guidance and simple/cost-effective construction of the air fryer 100.

The air guide members 112, 113, 114, 115, e.g. air guide flaps, can be formed from any suitable thermally and mechanically robust material. In some embodiments, the air guide members 112, 113, 114, 115 are each formed from a metallic material and/or a plastic material.

Non-limiting examples of metallic materials for inclusion in the air guide members 112, 113, 114, 115 include aluminium and/or stainless steel. Non-limiting examples of plastic material, e.g. heat resistant plastic material, for inclusion in the air guide members 112, 113, 114, 115 include silicone, polyetherimide (PEI), polyphthalamide (PPA) and polyphenylene sulfide (PPS) composite material, etc.

It is noted at this point that the embodiment shown in FIG. 1 may be regarded as a single-pot air fryer 100 in which the air guide members 112, 113, 114, 115 guide (partially) air towards the end 120 of the cooking chamber 102 along a side interior surface of a wall 125 that at least partly delimits the cooking chamber 102. The air flowing along the side interior surface of the wall 125 travels through the food FD, e.g. by flowing into the air channel 104 and then passing upwards through the food support 103 and through the food FD supported thereon from the bottom up.

In other embodiments, such as shown in FIG. 2, the air fryer 100 can be regarded as a double-pot air fryer 100 that comprises an inner wall 126, which inner wall 126 at least partly delimits an inner cooking chamber in which the food FD is receivable. In such embodiments, an air duct 127 is defined between the outer wall 125 and the inner wall 126.

In some embodiments, the inner wall 126 is attached or attachable to the food support 103. For example, the inner wall 126 and the food support 103 may together define a receptacle, e.g. a basket, in which food is receivable.

It is noted that the air fryer 100 may, for instance, include a pair of baskets for arranging side-by-side in the cooking chamber 102. In such embodiments, the food support 103 may comprise a first food support portion included in one of the baskets, and a second food support portion included in the other of the baskets.

Thus, the air guidance principles of the present disclosure may be applicable to a dual-basket air fryer 100.

Alternatively, the basket or the cooking chamber 102 may be divided by a separation wall. Alternatively, the air fryer 100 includes two cooking chambers 102 with two or more fans 106 and arrangements of air guide members.

Together with two food supports 103 or with a separation wall, two air circulation chambers may be realized.

Referring again to FIG. 2, the surface 118 of each of the air guide members 112, 113, 114, 115 may be arranged to guide at least part of air radially expelled from the fan 106 into the air duct 127 and towards the end 120 of the cooking chamber 102. The air guide members 112, 113, 114, 115 guiding air radially expelled from the fan 106 into the air duct 127 may be particularly effective in promoting air circulation through, rather than across, food FD received in the inner cooking chamber. As shown in FIG. 2, the air duct 127 may extend to reach the air channel 104 provided between the end 120 of the cooking chamber 102 and the food support 103.

The air may be guided along the surface 118 of the air guide members 112, 113, 114, 115, e.g. curved flaps, and pushed through the air duct 127 towards the fan-facing end 120 of the cooking chamber 102, e.g. the bottom of the cooking chamber 102.

Due to the kinetic energy of the flow and the resulting pressure field, the air may then be pushed "through" the food FD to achieve the above-described favorable cooking performance.

Irrespective of whether the air fryer 100 is a single-pot or a double-pot air fryer 100, the air guide members 112, 113, 114, 115, e.g. curved flaps, may be mounted nearby the air heater fan 106 and may guide air radially expelled by the fan 106 towards the fan-facing end 120 of the cooking chamber 102, e.g. along solid vertical wall(s) 125.

In some embodiments, and irrespective of whether the air fryer 100 is a single-pot or a double-pot air fryer 100, an air guide element is arranged in the air channel 104 to guide the air in the air channel 104 through the food support 103, e.g. in the direction of the fan 106.

The air guide element may, for example, comprise a so-called starfish shape. The starfish shape may comprise a plurality of radial fins which are shaped to guide the air in the air channel 104 through the food support 103.

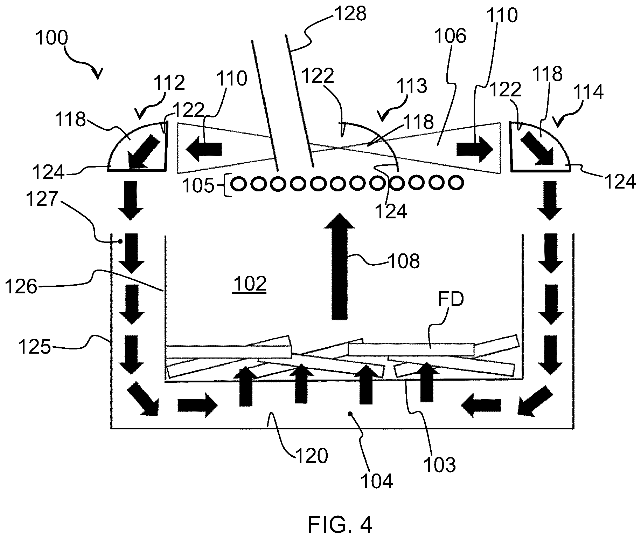

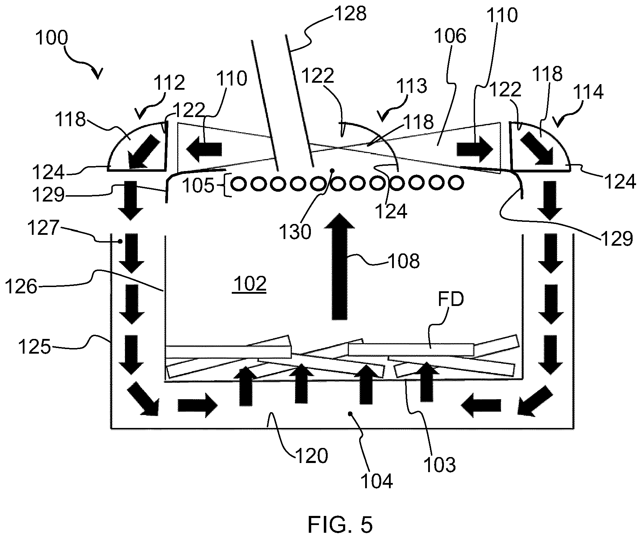

In some embodiments, such as shown in FIGs. 4 and 5, the air fryer 100 comprises a housing 128 that extends into the cooking chamber 102. The housing 128 may, for example, contain one or more sensors, for example one or more of an infrared sensor and a camera. Alternatively or additionally, the housing 128 may be configured to enable an interior of the cooking chamber 102 to be viewed from outside the cooking chamber 102 through a viewing window defined in the housing 128.

The viewing window may assist the user to monitor cooking of the food FD, e.g. directly by eye and/or via a camera assembly arranged to capture image(s) of the interior of the cooking chamber 102 through the viewing window.

In some embodiments, multiple housings 128 and/or viewing window sections may be provided between air guide members 112, 113, 114, 115.

Alternatively or additionally, a viewing window may extend across a total side e.g. the frontside, or even more of the air fryer 100.

At least part of the housing 128 may be arranged around the fan 106 and in the path of air radially expelled from the fan 106. This arrangement of the housing 128 may assist the interior of the cooking chamber 102 to be sensed and/or viewed from outside the cooking chamber 102.

The housing 128, e.g. arranged at the top of the air fryer 100, may be a desirable feature, for example for users wishing to visually monitor cooking via the viewing window defined in the housing 128. However, the housing 128 may present challenges in terms of homogeneity of airflow delivered to the food FD, and thus compromised cooking performance particularly when staple food FD, e.g. French fries, is being cooked.

The housing 128 itself may interrupt airflow around the fan 106 and push it downwards, like a wing. Adding more "wings", in the form of the air guide members 112, 113, 114, 115 around the fan 106 may nonetheless assist to avoid concentration of vertical, e.g. downwards flow, only in one area, while allowing more angularly equally spaced vertical, e.g. downwards, jets.

In other words, whilst arrangement of the housing 128 in the path of air radially expelled from the fan 106 may risk compromising uniformity of flow of heated air towards the fan-facing end 120 from different regions around the fan 106, this issue may be mitigated by inclusion of the air guide members 112, 113, 114, 115 arranged, together with the housing 128, around the fan 106.

In some embodiments, such as shown in FIGs. 4 and 5, the housing 128 is spaced apart from one or more of the air guide members 112, 113, 114, 115 around the fan 106. Alternatively or additionally, one of the air guide members 112, 113, 114, 115 may be integrated into the housing 128. In such embodiments, the housing 128 may fulfil a dual purpose: (i) providing a housing 128 for sensor(s) and/or a viewing window tunnel in which the viewing window is defined, and (ii) assisting to guide air towards the fan-facing end 120 of the cooking chamber 102.

In some embodiments, such as shown in FIG. 5, the air fryer 100 comprises a heat reflector 129 that partitions the cooking chamber 102 into a first zone and a second zone. Such a heat reflector 129 may assist efficient heating of food located in the first zone of the cooking chamber 102.

The heat reflector 129 can be formed of any suitable thermally robust material capable of reflecting heat from the first zone of the cooking chamber 102 back towards food FD received in the first zone. In some embodiments, the heat reflector 129 is formed from a metallic material, e.g. steel.

As shown in FIG. 5, the fan 106 may be arranged in the second zone, with an opening 130 in the heat reflector 129 being arranged to enable the air to be drawn into the fan 106 along the axial direction 108.

In some embodiments, the inner wall 126 extends from the heat reflector 129 so that the air duct 127 is at least partly defined by the heat reflector 129 and the inner wall 126 on one side and the outer wall 125 of the cooking chamber 102 on the other side.

In such embodiments, the heat reflector 129 and the inner wall 126 may, together with the air guide members 112, 113, 114, 115, guide the air, e.g. almost all of the air, radially expelled from the fan 106 into the air channel 104.

In embodiments in which the air fryer 100 includes the housing 128 that extends into the cooking chamber 102, the housing 128 may extend across the second zone. Extension of the housing 128 across the second zone may, for example, enable the first zone of the cooking chamber 102 to be sensed and/or viewed via sensor(s) and/or a viewing window defined in the housing 128. Thus, the food FD in the first zone of the cooking chamber 102 may be sensed and/or viewed via the viewing window in spite of inclusion of the heat reflector 129.

In some embodiments, one of more of the air guide members 112, 113, 114, 115 is or are mounted to the heat reflector 129. In such embodiments, the heat reflector 129 may fulfil the additional purpose of supporting one or more of the air guide members 112, 113, 114, 115.

In some embodiments, a portion of the interior surface of the outer wall 125, e.g. heat shield, and a portion of the heat reflector 129 are each curved in the vicinity of the fan 106 to guide at least part of the air radially expelled from the fan 106 towards the fan-facing end 120 of the cooking chamber 102.

Such a curved portion of the interior surface of the outer wall 125, e.g. heat shield, and curved portion heat reflector 129 may assist to guide air towards the bottom of the cooking chamber 102, but without the circumferential velocity component being converted to to a vertical, e.g. downward, flow towards the fan-facing end 120 of the cooking chamber 102. The latter may, however, be provided by the air guide members 112, 113, 114, 115, as previously described.

In some embodiments, one or more of the air guide members 112, 113, 114, 115 is or are permanently mounted in, in other words not removable from, the air fryer 100. Permanently mounting one or more of the air guide members 112, 113, 114, 115 in the air fryer 100, e.g. to the heat reflector 129, may assist to ensure more consistent and reliable air guidance relative to, for example, detachable mounting of the air guide member(s) 112, 113, 114, 115. Detachable mounting of the air guide member(s) 112, 113, 114, 115 could increase risk of unsuitable airflow conditions being created in the cooking chamber 102 due to erroneous (re-)attachment of the air guide members 112, 113, 114, 115 by the user and/or failure of the user to (re-)attach the air guide members 112, 113, 114, 115.

In summary, the present disclosure describes an air guidance, e.g. airflow optimization, concept that aims to deliver favorable cooking results, particularly for an air fryer 100 having a housing 128 and/or window provided at a top of the cooking chamber 102.

The disclosure can be generally implemented in cooking devices having hot air circulation from the top of the cooking chamber 102, in other words having the fan 106 arranged proximal to the top of the cooking chamber 102 and arranged to draw in air axially and upwardly across the cooking chamber 102. The term air fryer 100 as used herein may encompass such cooking devices, and hence may cover air cookers, air-steam cookers or similar that have such hot air circulation from the top of the cooking chamber 102.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An air fryer (100) comprising:
a cooking chamber (102), a height of the cooking chamber being defined between a top and a bottom of the cooking chamber when the air fryer is orientated for use;
a heating element (105);
a circulation system for circulating air heated by the heating element in the cooking chamber, the circulation system comprising a fan (106) arranged to draw in air along an axial direction (108), to provide an airflow that traverses the height of the cooking chamber, and expel the air in radial directions (110);
a plurality of air guide members (112, 113, 114, 115) spaced apart from each other around the fan, each of the air guide members having a surface (118) arranged to guide at least part of air radially expelled from the fan towards an end (120) of the cooking chamber that faces the fan, wherein a first portion (122) of the surface faces said end of the cooking chamber and a second portion (124) of the surface extends away from the first portion and towards said end of the cooking chamber;
a permeable food support (103) for supporting food in the cooking chamber;
and
an air channel (104) between the end of the cooking chamber and the food support, the air channel being arranged to receive air guided to the end of the cooking chamber, and distribute said air to the food supported by the food support.

2. The air fryer (100) according to claim 1, wherein the surface (118) curvedly extends between the first portion (122) and the second portion (124).

3. The air fryer (100) according to claim 1 or claim 2, wherein the plurality of air guide members (112, 113, 114, 115) comprises at least three air guide members.

4. The air fryer (100) according to any one of claims 1 to 3, wherein one or more of the air guide members (112, 113, 114, 115) is or are permanently mounted in the air fryer.

5. The air fryer (100) according to any one of claims 1 to 4, comprising a housing (128) extending into the cooking chamber (102); optionally wherein the housing is configured to enable an interior of the cooking chamber to be viewed from outside the cooking chamber through a viewing window defined in the housing.

6. The air fryer (100) according to claim 5, wherein at least part of the housing (128) is arranged around the fan (106) and in the path of air radially expelled from the fan.

7. The air fryer (100) according to claim 5 or claim 6, wherein the housing (128) is spaced apart from one or more of the air guide members (112, 113, 114, 115) around the fan (106).

8. The air fryer (100) according to any one of claims 5 to 7, wherein one of the air guide members (112, 113, 114, 115) is integrated into the housing (128).

9. The air fryer (100) according to any one of claims 1 to 8, wherein the fan (106) is arranged proximal to the top of the cooking chamber (102), said end (120) of the cooking chamber corresponding to the bottom of the cooking chamber.

10. The air fryer (100) according to any one of claims 1 to 9, comprising:
an outer wall (125) that at least partly delimits the cooking chamber (102); and
an inner wall (126), the inner wall at least partly delimiting an inner cooking chamber in which food is receivable, wherein an air duct (127) is defined between the outer wall and the inner wall, said surface (118) being arranged to guide at least part of air radially expelled from the fan (106) into the air duct and towards the end (120) of the cooking chamber.

11. The air fryer (100) according to any one of claims 1 to 10, comprising a heat reflector (129) that partitions the cooking chamber (102) into a first zone and a second zone; optionally wherein the fan (106) is arranged in the second zone, an opening (130) in the heat reflector being arranged to enable said air to be drawn into the fan along said axial direction (108).

12. The air fryer (100) according to claim 11 when dependent from any one of claims 5 to 8, wherein the housing (128) extends across the second zone.

13. The air fryer (100) according to claim 11 or claim 12, wherein one of more of the air guide members (112, 113, 114, 115) is or are mounted to the heat reflector (129).

14. The air fryer (100) according to any one of claims 1 to 13, wherein the food support (103) is removable from the cooking chamber (102).

15. The air fryer (100) according to any one of claims 1 to 14, wherein the food support (103) is a single part or is included in an assembly of components.
